# EUROPEAN PATENT SPECIFICATION

(11) **EP 2 666 007 B1**
(45) Date of publication and mention of the grant of the patent: **07.03.2018**
(21) Application number: 12719406.6
(22) Date of filing: 17.01.2012
(51) Int. Cl.: G01N 15/06, G01N 1/22, G01N 1/24

(54) **APPARATUS AND METHOD FOR MONITORING PARTICLES**
VORRICHTUNG UND VERFAHREN ZUR ÜBERWACHUNG VON PARTIKELN
APPAREIL ET PROCÉDÉ POUR SURVEILLER DES PARTICULES

(30) Priority: 18.01.2011 FI 20115045
(43) Date of publication of application: 27.11.2013
(73) Proprietor: Pegasor OY, 33100 Tampere (FI)
(72) Inventor: JANKA, Kauko, FI-33100 Tampere (FI)
(74) Representative: Kolster Oy Ab
(86) International application number: PCT/FI2012/050035
(87) International publication number: WO 2012/098290

(56) References cited:
- EP-A1- 1 681 551
- EP-A1- 2 500 709
- EP-A2- 2 511 690
- WO-A1-2009/109688
- DE-A1- 10 036 304
- JP-A- 60 209 167
- US-A- 4 008 620

## Description

### Field of the invention

The present invention relates to an apparatus for monitoring particles and especially to an apparatus as defined in the preamble of independent claim 1.

### Background of the invention

Fine particles having diameter of 1 to 1000 nm are formed in many industrial processes and combustion processes. For various reasons these fine particles are measured. The fine particle measurements may be conducted because of their potential health effects and also for monitoring operation of industrial processes and combustion processes, such as operation of combustion engines, especially diesel engines. Another reason for monitoring fine particles is the increasing use and production of nanosized particles in industrial processes. The above reasons there is need for reliable fine particle measurement equipments and methods.

One prior art method and apparatus for measuring fine particles is described in document WO2009109688 A1. In this prior art method clean, essentially particle free, gas is supplied into the apparatus and directed as a main flow via an inlet chamber to an ejector provided inside the apparatus. The clean gas is further ionized before and during supplying it into the inlet chamber. The ionized clean gas may be preferably fed to the ejector at a sonic or close to sonic speed. The ionizing of the clean gas may be carried out for example using a corona charger. The inlet chamber is further provided with a sample inlet arranged in fluid communication with a channel or a space comprising aerosol having fine particles. The clean gas flow and the ejector together cause suction to the sample inlet such that a sample aerosol flow is formed from the duct or the space to the inlet chamber. The sample aerosol flow is thus provided as a side flow to the ejector. The ionized clean gas charges at least a fraction of the particles. The charged particles may be further conducted back to the duct or space containing the aerosol. The fine particles of the aerosol sample are thus monitored by monitoring the electrical charge carried by the electrically charged particles. Free ions are further removed using an ion trap arranged downstream of the ejector. However, document WO2009109688 A1 does not describe any advantageous embodiment of the ion trap in relation to the aerosol flow.

EP 1 681 551 A1, Matter Engineering AG, 19.7.2006 describes an apparatus for aerosol monitoring where additional ions are removed by an ion trap. The ion trap may be a rod with a voltage high enough to deposit the ions. Due to the lower mobility charged particles are not deposited. The publication describes a rod-like ion trap but does not describe any advantages of guiding the aerosol flow in the ion trap so that the direction of the aerosol flow in the ion trap would change.

One important demand for the fine particle monitoring apparatuses is reliable operation such that they may be operated long time periods without need for maintenance. In many applications, such as monitoring fine particles of combustion engines, it is also preferable that the monitoring apparatus may be operated continuously for conducting fine particle measurements in real-time. Furthermore, in many cases the fine particle monitoring apparatuses have to be installed in existing systems in which there is only limited amount of space for the particle measurement apparatus. Usually industrial systems, combustion systems or other aerosol comprising systems are designed as compact as possible. Therefore, the fine particle measurement apparatus also has to be small sized.

### Brief description of the invention

The object of the present invention is to provide an apparatus and arrangement so as to overcome the prior art disadvantages. The objects of the present invention are achieved with an apparatus according to claim 1, which is characterized in that the ion trap is provided as a flow guide arrangement substantially downstream of an ejector for changing the direction of the ejector flow discharging from the ejector.

The preferred embodiments of the invention are disclosed in the dependent claims.

The present invention is based on the idea of guiding the ejector flow discharging from the ejector to a transversal direction in relation to the flow direction inside the ejector. In other words the ejector flow is turned downstream of the ejector to at least partly folded flow path. This means that the flow direction of the ejector flow may be turned at least partly radial in relation to the axial direction of the ejector. The apparatus of the present invention comprises a flow guide arrangement for changing the direction of the ejector flow discharging from the ejector. The flow guide arrangement may comprise one or more flow guides arranged to guide the ejector flow downstream of the ejector. At least one of the flow guides is provided as an ion trap for removing free ions not attached to particles from the ejector flow. The ion trap forming at least part of the flow guide arrangement may comprise one or more flow guides in the form of a cup-like flow guide comprising a closed bottom, a side wall or side walls extending from the bottom and an open front wall. The cup-like flow guide may be arranged to receive the ejector flow via the open front wall for changing the direction of the ejector flow.

The present invention has the advantage that the flow path of the ejector flow downstream of the ejector and in the ion trapping chamber of the apparatus may be formed as at least partly folded flow path. The folded flow path of the ejector flow in downstream of the ejector in the ion trapping chamber enables shortening the ion trapping chamber in the axial direction of the apparatus and the ejector without shortening the time the ejector flow is subjected to the ion trapping voltage of the ion trap. This is carried out by guiding the ejector flow into at least partly folded flow path such that the ejector flow flows at least partly round the ion trap. In other words the folded flow path of the ejector flow enables increasing the time the ejector flow is subjected to the ion trap. Thus the increased time the ejector flow is subjected to the ion trap enables shortening the dimensions of the ion trapping chamber.

### Brief description of the figures

In the following the invention will be described in greater detail, in connection with preferred embodiments, with reference to the attached drawings, in which
Figure 1 is a schematic view of a prior part apparatus for monitoring particles;
Figure 2 is a schematic view of one embodiment of an apparatus for monitoring particles according to the present invention;
Figure 3 is a schematic view of another embodiment of an apparatus for monitoring particles according to the present invention;
Figure 4 is yet another embodiment of an apparatus for monitoring particles according to the present invention;
Figure 5 is detailed view of the apparatus of figure 4;
Figures 6A and 6B show details of the apparatus of figure 4 and 5;
Figures 7 to 11 show alternative embodiments of the apparatus according to the present invention.

### Detailed description of the invention

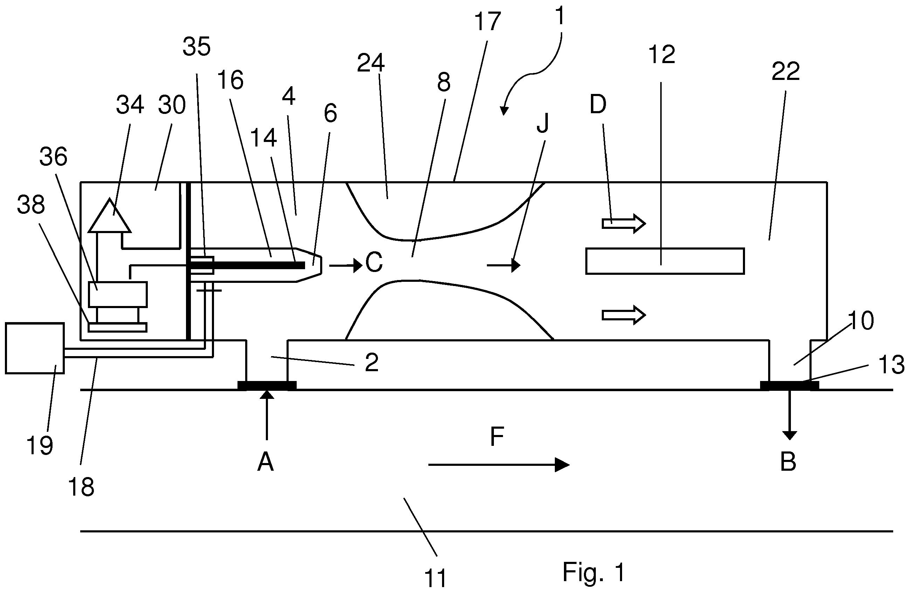

The figure 1 shows one embodiment of a prior art apparatus 1 for monitoring particles. The apparatus 1 comprises a measurement housing 17 providing space in which the aerosol comprising particles is conducted. A sample aerosol flow A is guided from a channel, duct or a space comprising aerosol inside the measurement housing 17 for monitoring or measuring particles in the aerosol. The apparatus 1 is connected to an aerosol duct 11 inside which is an aerosol flow F. Thus the apparatus 1 is arranged to monitor fine particles or particles in the aerosol flow F. The aerosol duct 11 may be exhaust duct of a combustion engine or the like. Alternatively aerosol duct 11 may be any space comprising aerosol or any duct or channel having an aerosol flow F. The space may comprise an aerosol flow, but the apparatus may also be arranged to monitor particles of a substantially stationary aerosol for example particles of indoor air.

The apparatus 1 comprises a sample inlet 2 for guiding a sample aerosol flow A into the apparatus 1. The sample inlet 2 is in fluid communication with the aerosol duct 11 and inside of the measurement housing 17 of the apparatus 1. The apparatus 1 preferably also comprises a sample outlet 10 through which the analyzed sample aerosol flow B is exhausted from the measurement housing 17 and the apparatus 1. In the embodiment of figure 1 the analyzed sample aerosol B is returned to the aerosol duct 11. The sample outlet 10 may also be arranged to conduct the analyzed sample aerosol B directly to the ambient atmosphere or some other location, for example a container. Accordingly the apparatus 1 does not necessarily collect or store the sample aerosol A received from the aerosol duct 11. In an alternative embodiment the apparatus may also comprise a sample-inlet arrangement 2 comprising one or more sample inlets. Furthermore the apparatus may also comprise a sample outlet arrangement 10 comprising one or more sample outlets.

The apparatus 1 comprises an inlet chamber 4 and the sample inlet 2 is arranged to provide a fluid communication between the aerosol duct 11 and the inlet chamber 4. The apparatus further comprises a gas supply for supplying clean particle free gas C into the inlet chamber 4. The gas supply comprises gas supply connection 18 via which the clean gas may be brought from a gas source 19. The gas may be cleaned in a filter or the like for essentially removing particles from the gas such that the particle concentration in the pressurized gas is remarkably lower than the particle concentration in the sample aerosol flow A. The clean gas may be air or some other suitable gas. The clean gas may be also further conditioned before feeding it into the inlet chamber 4. The conditioning may comprise cooling or heating the gas and adjusting the gas flow speed and volume with a flow controller. The clean gas is then fed to the measurement apparatus 1 through the gas supply connection 18.

The apparatus 1 further comprises a clean gas supply channel 16 through which the clean gas is fed to inlet chamber 4 of the apparatus 1. The clean gas supply channel 16 is in fluid communication with the gas supply channel 18 and comprises a nozzle head 6 opening into the inlet chamber 4. The apparatus is further provided with an ionization device 14 for ionizing at least a portion of the clean gas before or during feeding the clean gas from the nozzle head 6 into the inlet chamber 4. In the embodiment of figure 1 the ionization device 14 is arranged to the clean gas supply channel 16. In the embodiment of figure 1 the ionization device is a corona needle 14 extending in the clean gas supply channel 16. The ionization device 14 may also be another kind of device suitable for ionization the clean gas. The nozzle head 6 and the corona needle 14 are advantageously arranged such that corona needle 14 extends essentially to the vicinity of the nozzle head 6. This helps the corona needle 14 to stay clean and improves the ion production. The clean gas flow passing the corona needle 14 keeps the corona needle clean. The corona needle 14 is isolated from the clean gas flow channel walls and the body 17 of the apparatus 1 by one or more electrical insulators 35. The walls of the gas supply channel 16 are preferably at the same potential as the corona needle 14. According to the above mentioned the gas supply channel 16 is arranged to provide an essentially particle free ionized gas flow C to the inlet chamber 4.

The apparatus is further provided with an ejector 24. The ejector 24 comprises a converging-diverging nozzle 24 forming thus a converging-diverging flow channel, the throat 8 of the ejector 24. The ejector 24 is a pump-like device utilizing the momentum of the main flow to create suction for a side fluid flow. The main fluid flow and the side fluid flow are at least partly mixed in the ejector 24. After passing through the throat 8 of the ejector 24, the mixed fluid expands and the velocity is reduced which results in converting kinetic energy back into pressure energy. In an alternative embodiment the apparatus may also comprise one or more clean gas supply channels 16, corona needles 14 and ejectors 24. In the embodiment of figure 1 the essentially particle free ionized gas flow C discharged from the nozzle 6 is fed to the throat 8 of the ejector 24 as a main flow. Therefore the clean gas supply channel 16 and the nozzle head 6 are arranged to feed the essentially particle free gas flow C at a high velocity into the throat 8. The velocity of the essentially particle free gas flow C is preferably sonic or close to sonic. In the ejector 24 the essentially particle free gas flow C forms a suction to the sample inlet 2 such that the sample aerosol flow A may be sucked into the inlet chamber 4. The sample aerosol flow A forms a side flow of the ejector 24. The flow rate of the sample aerosol flow A is depended essentially only on the geometry of ejector 24 and the flow rate of the essentially particle free ionized gas flow C. In a preferred embodiment the ratio of the main flow C to the side flow A is small, preferably less than 1:1 and more preferably less than 1:3. According to the above mentioned there is no need for actively feed the sample aerosol flow A into the apparatus 1, but it may be sucked by the by means of the clean gas supply and the ejector 24.

The essentially particle free ionized gas flow C and the sample aerosol flow are mixed in the inlet chamber 4 and in the ejector 24 such that the particles of the sample aerosol flow A are electrically charged during the mixing by the ionized clean gas flow C. The essentially particle free ionized gas flow C and the sample aerosol flow A form together an ejector flow J discharging from the ejector 24 and specifically from a throat 8 of the ejector 24. The apparatus 1 further comprises an ion trapping chamber 22 inside the measurement housing 17. The ion trapping chamber 22 comprises an ion trap 12 for removing ions that are not attached to the particles of the sample aerosol flow A. The ion tarp 12 may be provided with a collection voltage for removing the mentioned free ions. The voltage used for trapping free ions depends on design parameters of the apparatus 1, but typically the ion trap 12 voltage is 10v - 30kV. The ion trap 12 voltage may also be adjusted to removed nuclei mode particles or even the smallest particles in the accumulation mode. In an alternative embodiment the ion trap 12 is arranged to remove ions not attached to the particles from the ejector flow J by an electric field, magnetic field, diffusion or a combination thereof.

The sample aerosol and the essentially clean gas mixed together, the ejector flow J, are discharged from the apparatus 1 through the outlet 10 together with the ionized particles of the sample aerosol. The outlet 10 is provided in fluid communication with the ion trapping chamber 22 for exhausting the discharge flow B out of the apparatus 1. The outlet 10 may be arranged to supply the discharge flow B back to the aerosol duct 11 or to ambient atmosphere or some other location.

Particles of the aerosol F in the aerosol duct 11 are monitored by measuring the electrical charge carried by the electrically charged particles of the sample aerosol flow A. In a preferred embodiment the particles of the aerosol F are monitored by measuring the electrical charge escaping with the electrically charged particles from the apparatus 1 with the ejector flow J through the outlet 10. The measurement of the charge carried by the electrically charged particles may be measured by many alternative ways. In one embodiment the charge carried by the electrically charged particles is measured by measuring the net current escaping from the sample outlet 10. To be able to measure the small currents, typically at pA level, the whole apparatus 1 is isolated from the surrounding systems. In figure 1 the apparatus 1 is provided with installation insulators 13 for insulating the apparatus 1 from the duct 11. An electrometer 34 may be assembled between the isolated apparatus 1 (i.e. a pint in the wall of measurement housing 17) and a ground point of the surrounding systems. With this kind of setup, the electrometer 34 may measure the charge escaping from the isolated apparatus 1 together with the ionized particles. In other words this kind of setup measures the escaping current.

Figure 1 shows one embodiment of for monitoring the particles by measuring the current escaping from the apparatus 1. The escaping current is measured with electrical arrangement 30. The electrical arrangement 30 comprises a high voltage source 36 connected to the ionization device 14 for providing a high voltage to the ionization device 14. The high voltage source 36 is electrically isolated from the other system via an isolating transformer 38 and electrical insulators 35. The ionization device 14 is in the same electrical potential as the walls of the gas channel 16. The electrical arrangement 30 comprises further an electrometer 34 assembled between the ionization device 14 and to a point having a galvanic contact with the wall of the measurement housing 17. First contact of the high voltage source 36 is connected to the ionization device 14 and the second contact is connected as a first input of the electrometer 34. The second input of the electrometer 34 is connected to the wall of the measurement housing 17 and to the ion trap 12. With this kind of electrical arrangement 30, the electrometer 34 measures the charge escaping from the ion trapping chamber 22 and from the apparatus 1 with the ionized particles, e.g. measures the escaping current.

The ion trap 12 prevents the free ions escaping from the apparatus 1. The ion trap 12 is connected to a collection voltage source 36 via an ion trap conductor (not shown in figure 1). In the prior art the ion trap 12 is provide as net-like electrodes or plate like electrodes. Figure 1 shows one prior art embodiment in which the ion trap 12 plate arrangement arranged downstream of the ejector 24 for removing free ions from the ejector flow J. The ion trap 12 is connected to a collection voltage source 36. In an alternative embodiment the ion trap may be arranged to remove ions not attached to the particles from the ejector flow J by an electric field, magnetic field, diffusion or a combination thereof.

As shown in figure 1 the ejector flow J discharges from the ejector 24 in the axial direction of the ejector or the throat 8 of the ejector 24. The axial direction of the ejector 24 is the mean axial direction of the ejector 24. In this context the direction of the ejector flow J discharging from the ejector 24 is the axial direction of the ejector 24. In practice the ejector flow will expand when it discharges from the ejector 24, but the mean direction of the ejector flow J is essentially parallel with the axial direction of the ejector 24. Figure 1 shows a prior art arrangement in the ion trapping chamber 22. The ejector flow J continues to flow in the direction of the axial direction of the ejector 24 in the ion trapping chamber 22, as shown with arrows D. The ion trap 12 is arranged to extend substantially in the axial direction of the ejector 12 for efficiently removing free ions from the ejector flow J. In other words ion trap 12 is arranged to extend in the flow direction of the ejector flow J discharging from the ejector 24 for providing a sufficient contact time between the ejector flow J and the ion trap 12 such that the free ions may be efficiently removed from the ejector flow J. The disadvantage of this prior art ion trap arrangement is that it requires a long ion trapping chamber 22 and thus the outer dimensions of the apparatus become large.

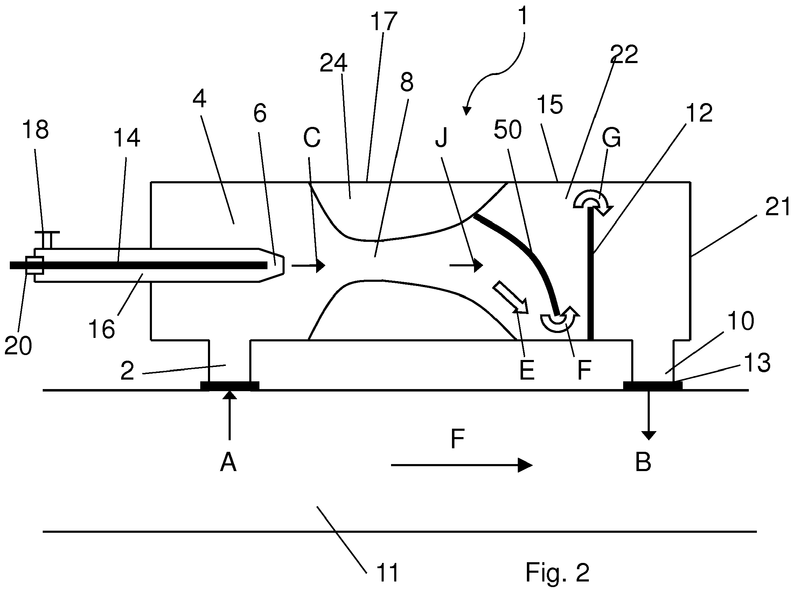

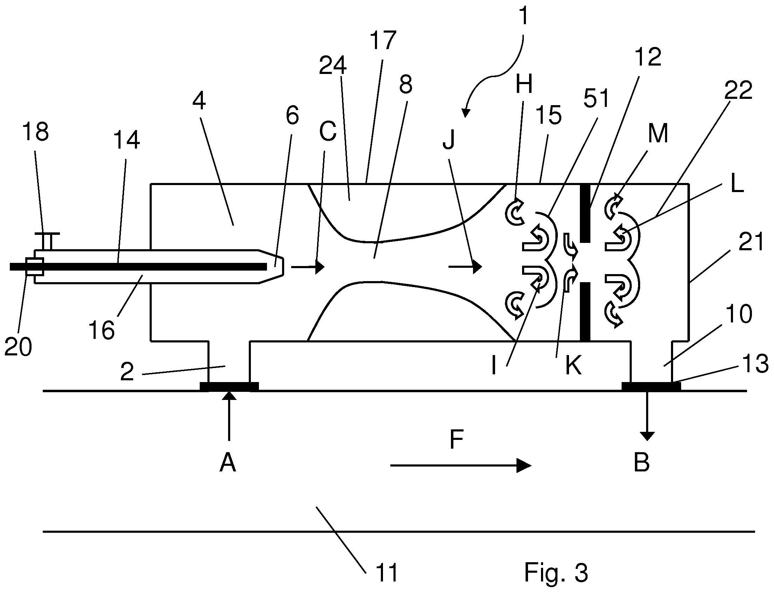

Figure 2 shows one embodiment of the apparatus 1 according to the present invention. The apparatus may be identical with the apparatus of figure 1 in terms of the operating principle. The electrical arrangement is omitted from figures 2 and 3 for simplicity. The apparatus 1 of figure 2 for monitoring particles in the channel 11 comprises the ejector 24, gas supply 6, 16, 18 arranged to feed essentially particle free gas flow C to the ejector 24 and a sample-inlet arrangement 2 arranged to provide a sample aerosol flow A from the channel 11 into the ejector 24 by means of suction provided by the gas supply 6, 16, 18 and the ejector 24. The apparatus 1 further comprises a flow guide arrangement essentially downstream of the ejector 24 for changing the direction an ejector flow J discharging from the ejector 24. In the embodiment of figure 2, the flow guide arrangement comprises a flow guide 50 arranged downstream of the ejector 24 and into the ion trapping chamber 22. The flow guide 50 may be a guide plate or some other mechanical part arranged to change the flow direction of the ejector flow J. The flow guide arrangement may also comprise two or more separate flow guides 50.

As shown in figure 2 the flow guide 50 turns the ejector flow J in the direction of arrow E towards the side wall 15 of the ion trapping chamber 22. The ejector flow J then flows between the side wall 15 of the ion trapping chamber 22 and the flow guide 50. The ion trapping chamber 22 is further provided with an ion trap 12 extending from the side wall 15 of the ion trapping chamber 22. The ion trap 12 is arranged to form a second flow guide for guiding the ejector flow J inside the ion trapping chamber 22. The flow guide 50 and the ion trap 12 are arranged to turn the ejector flow J in the direction or arrow F towards the opposite part of the side wall 15. The ion trap 12 further is arranged to turn the ejector flow J in the direction of arrow G between the ion trap 12 and the side wall 15 of the ion trapping chamber 22 and further to the outlet 10 between the ion trap 12 and the end wall 21 of the ion trapping chamber 22. According to the above mentioned and figure 2 the flow guide arrangement comprising the flow guide 50 and the ion trap 12 is arranged to provide at least partly folded flow path for the ejector flow J. The folded flow path means that the flow path of the ejector flow J in the ion trapping chamber 22 and between the ejector 22 and the outlet 10 is twisted, zigzag or reciprocating in the axial direction of the ejector 24. The flow guide arrangement may be arranged to provide at least partly transverse flow path for the ejector flow J in relation to the axial direction of the ejector 24, and/or at least partly radial flow path for the ejector flow J in relation to the axial direction of the ejector 24. The ion trap 12 of figure 2 may be electrically insulated from the side wall 15 of the ion trapping chamber 22 and the ion trapping voltage is brought directly to the ion tarp 12.

Figure 3 shows another embodiment of the present invention. In figure 3 the flow guide arrangement comprises a cup-like flow guide 51 arranged downstream of the ejector 24. The cup-like flow guide 51 comprises a closed bottom, a side wall or side walls extending from the bottom and an open front wall. The bottom of the cup-like flow guide 51 is formed tapering towards the ejector 24 as shown in figure 3. The cup-like flow guide 51 may be arranged to receive the ejector flow J via the open front wall for changing the direction of the ejector flow J. The cup-like flow guide 51 may also be preferably arranged directly downstream of the ejector 24. The cup-like flow guide 51 receives the ejector flow J from the ejector 24 to the bottom of the cup-like flow guide 51. The bottom the cup-like flow guide 51 turns the ejector flow J at least partly back towards the ejector 24 as shown by arrows I, and further downstream of the ejector 24 between the cup-like flow guide 51 and the side walls 15 of the ion trapping chamber 22 in the direction of arrows H. The ion trapping chamber 22 is further provided with an ion trap 12 arranged downstream of the cup-like flow guide 51 and extending from the side walls of the ion trapping chamber 22 and having an opening the middle. The ion trap 12 forms one of the flow guides of the flow guide arrangement and guides the ejector flow in the direction of arrows K. The flow guide arrangement further comprises a second cup-like flow guide 51 arranged downstream of the ion trap 12. The ion trap 12 directs the ejector flow J into the second cup-like flow guide 51. The second cup-like flow guide 51 receives the ejector flow J and turns the ejector flow J at least partly back towards the ejector 24 as shown by arrows L, and further downstream of the ejector 24 between the cup-like flow guide 51 and the side walls 15 of the ion trapping chamber 22 and to the outlet 10 in the direction of arrows M between the scond cup-like flow guide and the end wall 21 of the ion trapping chamber 22. The ion trap 12 of figure 2 may be electrically insulated from the side wall 15 of the ion trapping chamber 22 and the ion trapping voltage is brought directly to the ion tarp 12.

The flow guide arrangement of the figure 3 also provides a folded flow path for the ejector flow inside the ion trapping chamber 22. The flow guide arrangement of figure 3 is also arranged to turn the ejector flow J at least locally to substantially opposite direction in relation to the flow direction inside the ejector 24. In any of the above embodiments the flow guide arrangement may comprise one or more flow guides 50, 51 in the form of a plate, flat plate or a curved plate. The flow guide arrangement may also comprise one or more flow guides in the form of a cup-like flow guide 51 comprising a closed bottom, a side wall or side walls extending from the bottom and an open front wall.

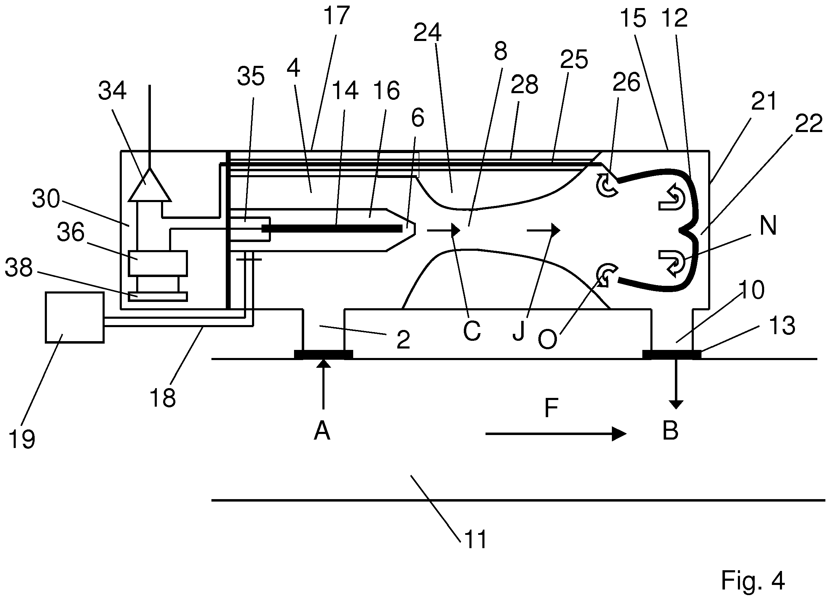

Figure 4 shows another embodiment of the present invention in which the gas supply 6, 16, 18 is arranged to feed essentially particle free ionized gas flow C to the ejector 24 for charging at least a fraction of the particles of the sample aerosol flow A, and that the apparatus further comprises an ion trap 12 for removing ions not attached to the particles from an ejector flow J. In figure 4 the flow guide arrangement comprises only one flow guide. In this embodiment the ion trap 12 is provided as flow guide. Thus the apparatus of figure 4 is provided with an ion trap arrangement which is arranged to change the direction the ejector flow J. In figure 4 the ion trap arrangement is arranged to provide partly folded flow path for the ejector flow J in the ion trapping chamber 22. The ion trap arrangement comprises a cup-like ion trap 12 having a closed bottom, side walls extending from the closed bottom and an open from wall, but in another embodiment the ion trap arrangement may also comprise one or more flat or curved ion trap plates 12 or several cup-like ion traps 12. In addition of the cup-like ion trap 12 the apparatus may also comprise one or more separate flow guides arranged inside the ion trapping chamber for guiding the ejector flow together J with the cup-like ion trap 12.

In figure 4 the cup-like ion trap 12 is arranged directly downstream of the ejector 24 for receiving the ejector flow J from the ejector 24. The bottom the cup-like ion trap 12 turns the ejector flow J at least partly back towards the ejector 24 as shown by arrows N, and further downstream of the ejector 24 between the cup-like ion trap 12 and the side walls 15 of the ion trapping chamber 22 in the direction of arrows O and to the outlet 10 between the ion trap 12 and the end wall 21 of the ion trapping chamber 22. Thus the cup-like ion trap 12 may be arranged to receive the ejector flow J from the ejector 24 and to guide the ejector flow J between the inner walls 15 of the ion trapping chamber 22 and the cup-like ion trap 12, and further downstream of the ejector 24.

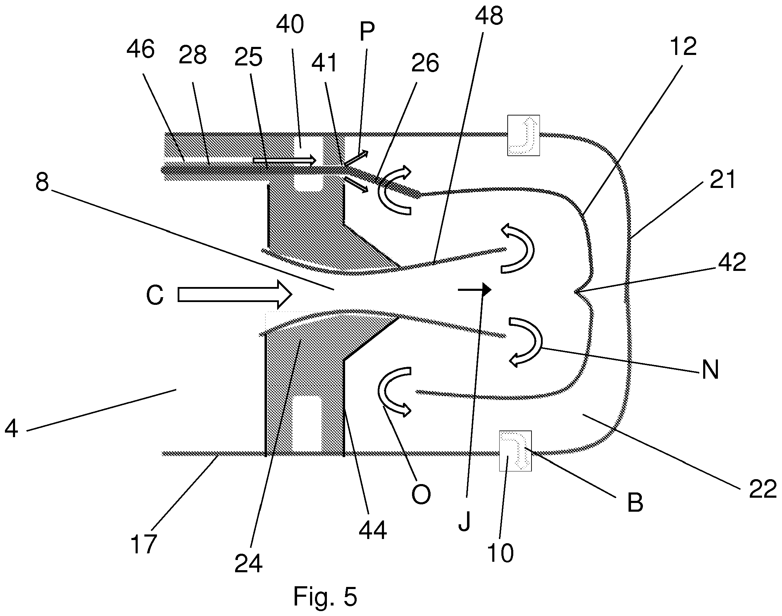

Figure 5 shows a preferable embodiment of the apparatus of figure 4. In this embodiment the ejector 24 is provided with a lip 48 extending downstream from the ejector 24 and from the throat 8 of the ejector 24 for guiding the ejector flow J from the ejector 24. The lip 48 may be arranged to guide ejector flow J inside the cup-like ion trap 12 or flow guide and/or the lip 48 may be arranged to extend inside the cup-like ion trap 12 or the flow guide, as shown in figure 5. The lip 48 may be part of a flow guide arrangement at it is preferably arranged in same electrical potential with the measurement housing 17. The bottom of the cup-like ion trap 12 may comprise a nose 42 extending towards the ejector 24. The nose 42 may be arranged to extend at least partly inside the throat 8 of the ejector 24. The nose 42 may be formed tapering towards the ejector 24. In figure 5 the ion trap 12 also forms a flow guide in the same way as in figure 4.

The ion trap arrangement may comprise an ion trap 12 connected to a collection voltage source 36 with a trap conductor 25 for providing the ion trap 12 with a collection voltage for removing ions not attached to the particles from an ejector flow J. As shown in figures 4 and 5, the trap conductor 25 is arranged to extend inside the measurement housing 17 and specifically inside the measurement housing 17 from the inlet chamber 4 to the ion trapping chamber 22, or through the inlet chamber 4 to the ion trpping chamber 22 for providing the collection voltage to the ion trap 12. As shown in figure 4 and 5 the measurement housing 17 may be provided with a trap conductor channel 28 through which the trap conductor 25 is passed inside the measurement housing 17 for separating the trap conductor 25 from the sample aerosol flow A, essentially particle free ionized gas flow C and the ejector flow J. The trap conductor channel 28 may provide an electrical insulation for the trap conductor 25 inside the measurement housing 17. The ion trap 12 may be supported with a mechanical trap holder 26 inside the ion trapping chamber 22, as shown in figures 4 and 5.

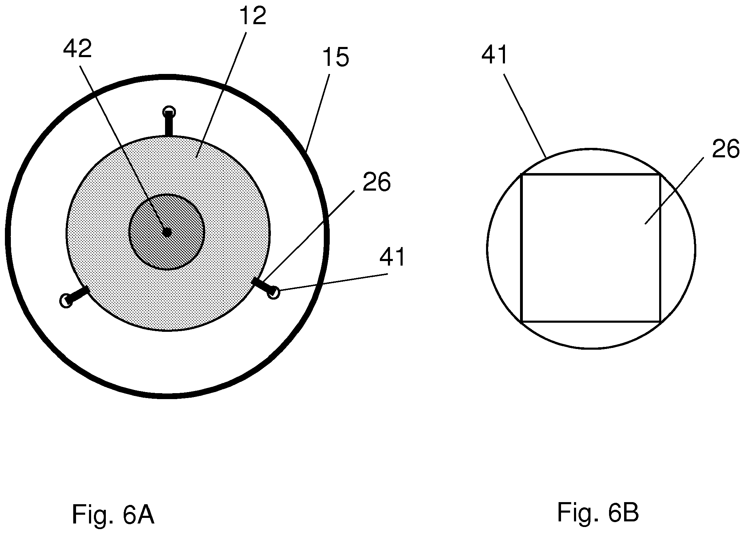

The trap conductor channel 28 may become contaminated as contaminants, such as fine particles of the sample aerosol may enter the trap conductor channel 28 via the opening from which the ion trap 12 or the ion trap holder 26 extending into the ion trapping chamber 22. The ion trap holder 26 may any mechanical and electrically conductive part arranged to support the ion trap 12 and to conduct the collection voltage from the ion trap conductor 25 to the ion trap 12. The ion trap holder 26 may be a separate part or it may be an integral part of the ion trap conductor 25 or the ion trap 12 or both. To prevent soiling of the trap conductor channel 28 it may be provided with a sheath gas flow P. In figures 4 and 5 the apparatus is further provided with a sheath gas flow channel 46 which is connected to all ion trap channels 28 or ion trap holder channels 28 such that the sheath gas may flow into the ion trapping chamber 22 between the inner walls of the trap conductor channel 28 and the trap conductor 25 or the ion trap holder 26 from the sheath flow outlet 41. The sheath gas flow P may comprise any suitable gas from any suitable gas source. In a preferred embodiment the sheath gas flow P is provided from the gas source supplying also the essentially particle free gas flow to the inlet chamber 4. The trap conductor channel 28 and the ion trap conductor 25 have preferably different cross-sectional shapes for provided a gap between the trap conductor channel 28 and the ion trap conductor 25 in which gap the sheath flow P flows. Figure 6B shows one embodiment in which the trap conductor channel 28 has a substantially round cross-section and the ion trap conductor 25 a substantially rectangular cross-section. In this embodiment the trap conductor channel 28 is provided with a sheath gas flow along the length of the ion trap conductor channel 28, as shown in figure 4. In an alternative embodiment the apparatus may further be a separate sheath gas flow channel 46 extending in side the measurement housing 17, as shown in figure 5. The apparatus is further provided with a circumferential sheath flow distribution channel 40 connected to the trap connector channel 28. The sheath flow distribution channel 40 is preferably in fluid connection with all of the ion trap holders 26. This enables all the trap holders 26 provided with a sheath flow through the trap conductor channel 28.

Figure 6A shows the ion trap arrangement of figures 4 and 5 viewed in the axial direction of the ejector 24. The cup-like ion trap 12 is supported by three ion trap holders 26 from of which one is connected to an ion trap conductor 25 and provided with a trap conductor channel (not shown). The sheath gas may be provided to all the trap holders 26 through the sheath gas distribution channel 40 which in figure 5.

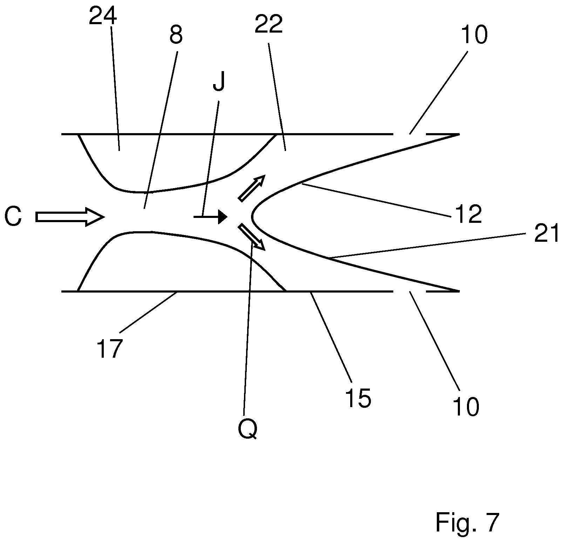

Figure 7 shows one embodiment of the present invention in which the end wall 21 of the ion trapping chamber 22 is design to form the ion trap 12 and/or the flow guide. As shown in figure 7 the end wall 21 of the ion trapping chamber 22 is formed to towards the throat 8 of the ejector 24. The end wall 21 may also be formed to extend at least partly or locally into the ion trapping chamber 22 for guiding the ejector flow J inside the ion trapping chamber 22, or at least partly or locally or partly inside the throat 8 of the ejector 24. In this embodiment the trap conductor is connected to the end wall 21 and the end wall 21 is further electrically insulated from the side walls 15 of the ion trapping chamber 22 and from the rest of the housing 17. It should be noted that the end wall 21 may also be formed in an alternative way. Thus in figure 7 the end wall 21 of the ion trapping chamber 22 forms the ion trap 12 of the apparatus. The end wall 212 also changes the flow direction of the ejector flow J in the direction of arrows Q. In an alternative embodiment the side walls 15 of the ion trapping chamber 22 may be arranged to form the ion trap of the apparatus. In this kind of embodiment the trap conductor is connected to the side wall(s) 15 and the side wall(s) are further electrically insulated from the end wall 21 and the rest of the measurement housing 17.

The embodiment of figure 7 may also be altered such that the apparatus comprises a separate ion trap as, in figures 1 to 5, but the end wall 21 and/or the side walls of the ion trapping chamber 22 are formed to provide flow guides for changing the direction of the ejector flow discharging from the ejector 24. Therefore, the side wall 15 may be provided with a projection extending into the ion trapping chamber 22. In a yet alternative embodiment at least part of the end wall 21 or the side wall(s) 15 of the measurement forms both a flow guide and an ion trap 12.

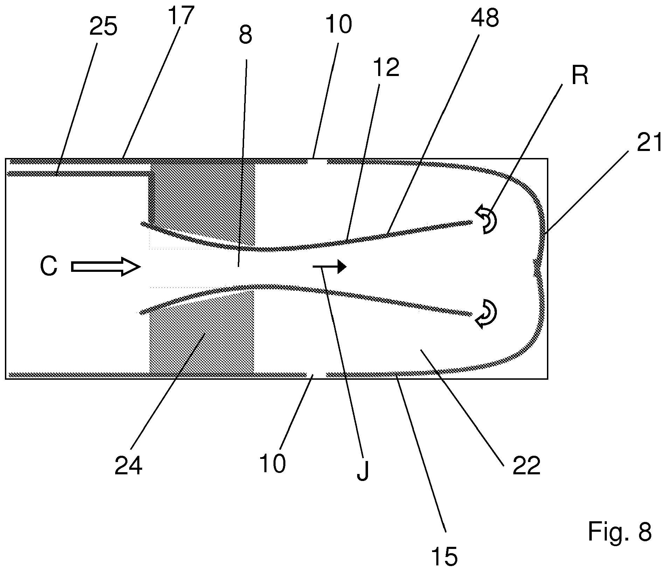

Figures 8 to 11 show alternative embodiments in which the ejector 24 is provided with a lip 48 extending downstream from the ejector 24 and from the throat 8 of the ejector 24 for guiding the ejector flow J from the ejector 24. The lip 48 may be provided in the same way as in figure 5. In the embodiments of figures 8 to 11, the lip 48 is provided from an electrically conductive material, such as stainless steel or some other metal, and the trap conductor 25 is electrically connected to the lip 48 such that the lip 48 forms the ion trap 12. In the embodiments of figures 8 to 10 the lip 48 also forms a flow guide such that the lip 48 and the end wall 21 and the side wall 15 ejector flow together change the flow direction of the ejector flow J inside the ion trapping chamber 22. In figures 8 to 11 the same reference numerals are mean the same parts as in figures 1 to 7.

Figure 8 shows one embodiment in which the lip 48 forms the ion trap 12 and extends into the ion trapping chamber 22 to form a flow guide for changing the flow direction of the ejector flow according to the arrows R and out of the apparatus through the outlet 10. In this embodiment the lip 48 electrically insulated from the measurement housing 17, side wall 17 and the end wall 21.

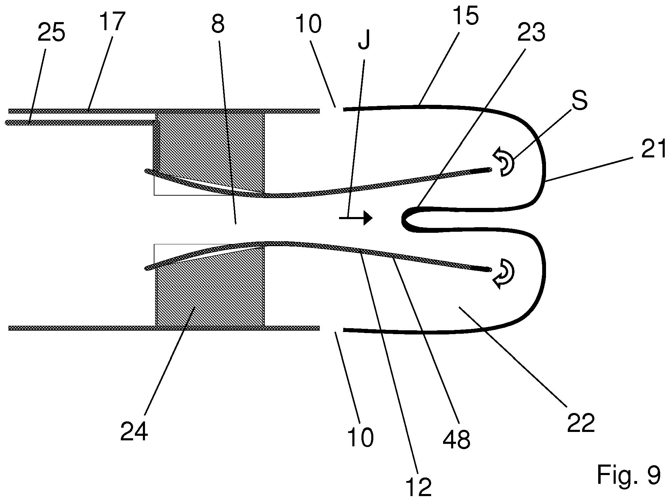

Figure 9 shows an alternative embodiment in which the end wall 21 of the ion trapping chamber 22 is formed to extend inside the lip 48 or inside the throat 8 of the ejector 24. Thus the end wall 21 forms a protrusion 23 which extends inside the lip 48 or inside the throat 8, as shown in figure 9. The protrusion 23 forms a flow guide changing direction of the ejector flow J together with the lip 48 according to the arrow S. Thus also the lip 48 forms a flow guide. The lip 48 forms also the ion trap 12 as the rap conductor 25 is electrically connected to the lip 48. In this embodiment the lip 48 electrically insulated from the measurement housing 17, side wall 17 and the end wall 21.

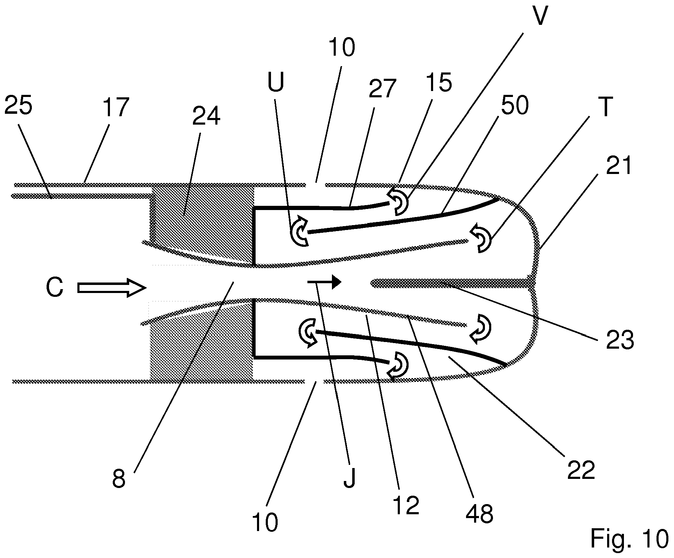

Figure 10 shows a yet alternative embodiment in which trap conductor 25 is electrically connected to the lip 48 and the lip forms the ion trap 12 and extends into the ion trapping chamber 22 to form a flow guide for changing the flow direction of the ejector flow J. In this embodiment the lip 48 is electrically insulated from the measurement housing 17, side wall 17 and the end wall 21. The end wall 21 of the ion trapping chamber 22 is provided with a needle protrusion 23 extending inside the lip 48 and providing a counter electrode for the ion trap 12. The end wall 21 or the side walls 15 of the ion trapping chamber 22 are further provided with flow guide 50 for further guiding the ejector flow inside the ion trapping chamber 22. The lip 48 is also provided with ion trap branch 27 extending inside the ion trapping chamber 22. The ion trap branch 27 is electrically connected to the lip 48 and forms also a flow guide. In this embodiment the ejector flow J is first directed in the direction of arrow T between the lip and the flow guide 50 and then in the direction of arrow U between the flow guide 50 and the ion trap branch 27 and further in direction of arrow V between the side wall 15 and the ion trap branch 27 out of the apparatus via outlet 10.

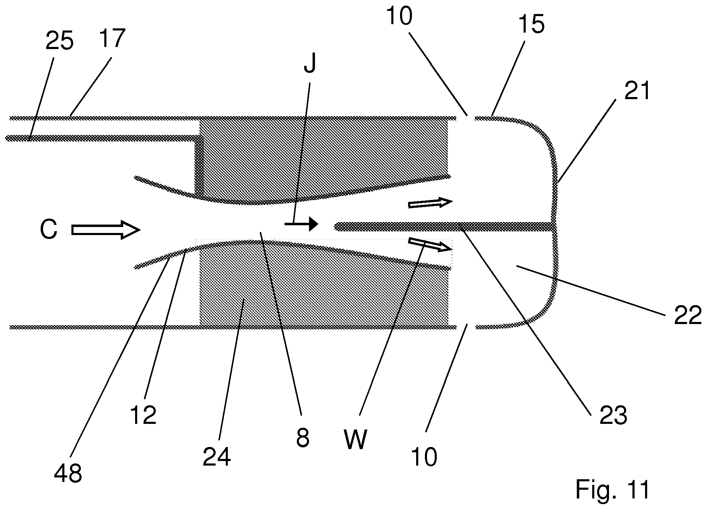

Figure 11 shows another embodiment in which the needle protrusion 23 is provided to the end wall 21 and it extends inside the throat 8. In this embodiment the lip 48 does not extend into the ion trapping chamber 22, but only forms an electrically conductive surface for the throat 8. The trap conductor 25 is electrically connected to the lip 48 such that the surfaces of the throat 8 of the ejector 24 form the ion trap 12. The needle protrusion 23 forms the counter electrode for the ion trap 12.

In all of the embodiments of figures 8 to 11 the end wall 21 or the side walls of the ion trapping chamber 22 may be connected to the ion trap conductor 25 instead of the lip 48. Thus it is possible that the end wall 21 or the side walls 15 of the ion trapping chamber 22 form the ion trap, in the same way as the embodiment of figure 7. In that kind of embodiment the flow guides 50 of figure 10 form also ion traps and the ion trap branch 27 forms a flow guide. In a yet alternative embodiment the needle protrusion 23 may electrically insulated from the end wall 21 and connected to the ion trap conductor 25 such that the needle protrusion forms the ion trap 12.

The measurement housing 17, and also the side walls 15 and the end wall 21, may be manufactured from a polymer material or from a powder metal for example by injection molding. Alternative the housing 17, and also the side walls 15 and the end wall 21, may be formed from a thin sheet metal, such as thin sheet steel. The thin sheet may be formed for example by deep drawing to provide desired shapes, as the protrusion 23 in figure 9.

The present invention also provides method for monitoring particles in a channel 11 or a space comprising aerosol. The method comprises essentially particle free gas flow C to an ejector 24, sucking a sample aerosol flow A from the channel 11 or the space by means of the essentially particle free gas flow C and the ejector 24 and changing the direction of an ejector flow J discharging from the ejector 24. The method may further comprise feeding essentially particle free gas flow C to the ejector 24, mixing at least a fraction of the sample aerosol flow A with the essentially particle free ionized gas flow C for charging at least a fractions of the particles of the aerosol and for providing the ejector flow J, and removing ions not attached to the particles from the ejector flow J with an ion trap arrangement. In the method changing of the direction of the ejector flow J with the ion trap arrangement 24 is provided such that the ejector flow J if directed to an at least partly folded flow path. In one embodiment of the present invention an ion trap or an ion trap arrangement 12 is used for guiding an ejector flow J in a particle monitoring apparatus or a particles sensor as described above.

In one embodiment the flow guide arrangement is arranged to extend at least partly into the diverging diffuser of the ejector or into the throat of the ejector. When the flow guide extends into the ejector, the ion trap utilizes the ejector structures and inner volume. As a result the total size of the measuring apparatus and the sample-gas residence time in the sensor can be reduced. The reduced residence time enables faster time response of the measurement apparatus.

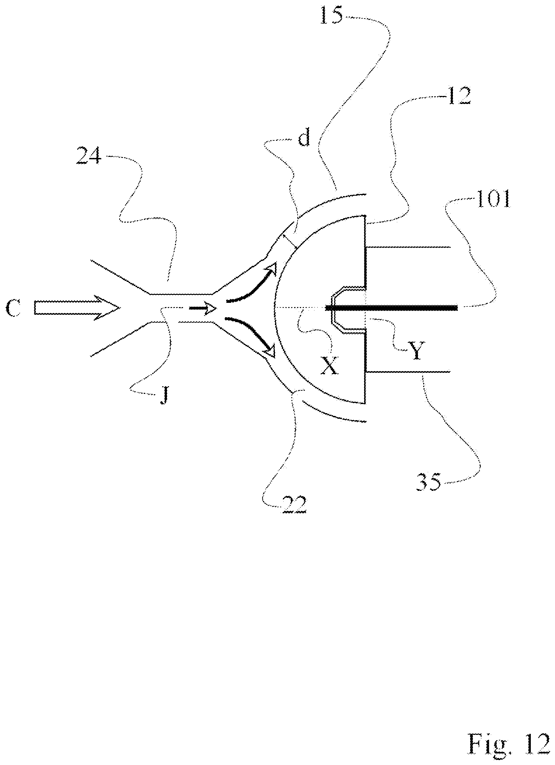

Figure 12 shows another embodiment of the present invention in which the ion trapping chamber 22 is designed in such a way that vibration does not essentially change the gap width d of the ion trapping space 22. The ion trapping chamber 22 is an immediate extension of the ejector 24, and in one embodiment the wall 15 of the ion trapping chamber may be at least partly the diverging wall of the ejector 24. The ion trap 12 of figure 12 is essentially a spherical cap (a cap cut from a sphere by a plane) and is mechanically supported from the intersection of the plane Y and the central axis X of the cap. With such a single-point support the vibration of the ion trap in respect to the support point does not cause essential change in the gap width d of the ion trapping space 22. It is obvious for a person skilled in the art that other geometries that a sphere segment may fulfill the criteria for eliminating the effect of vibration on the gap width d of the ion trapping chamber 22. Required trap voltage is fed into the trap 12 via an electrical conductor 101 passing through electrical insulator 35.

It is apparent to a person skilled in the art that as technology advanced, the basic idea of the invention can be implemented in various ways. The invention and its embodiments are therefore not restricted to the above examples, but they may vary within the scope of the claims.

## Claims

1. An apparatus (1) for monitoring particles in a channel (11) or a space comprising aerosol, the apparatus (1) comprising:
- an ejector (24);
- gas supply (6, 16, 18, 19) arranged to feed essentially particle free ionized gas flow (C) to the ejector (24) for charging at least a fraction of the particles of the sample aerosol flow (A);
- a sample-inlet arrangement (2) arranged to provide a sample aerosol flow (A) from the channel (11) or the space into the ejector (24) by means of suction provided by the gas supply (6, 16, 18, 19) and the ejector (24); and
- an ion trap (12) for removing ions not attached to the particles from an ejector flow (J);
**characterized in that** the ion trap (12) is provided as a flow guide arrangement essentially downstream of the ejector (24) for changing the direction of the ejector flow (J) discharging from the ejector (24).

2. The apparatus according to claim 1, **characterized in that** the flow guide arrangement is arranged to provide at least partly transverse flow path for the ejector flow (J) in relation to the axial direction of the ejector (24), or that the flow guide arrangement is arranged to provide at least partly radial flow path for the ejector flow (J) in relation to the axial direction of the ejector (24).

3. The apparatus according to claim 1 or 2, **characterized in that** the flow guide arrangement is arranged to turn the ejector flow (J) at least locally to substantially opposite direction in relation to the flow direction inside the ejector (24).

4. The apparatus according to any one of claims 1 to 3, **characterized in that** the flow guide arrangement comprises one or more flow guides in the form of a plate, flat plate or a curved plate; or that the flow guide arrangement comprises one or more flow guides in the form of a cup-like flow guide comprising a closed bottom, a side wall or side walls extending from the bottom and an open front wall.

5. The apparatus according to claim 4 in the case of a cup-like flow guide, **characterized in that** the cup-like flow guide is arranged to receive the ejector flow (J) via the open front wall for changing the direction of the ejector flow (J).

6. The apparatus according to any of the claims 1 to 5, **characterized in that** the flow guide arrangement extends into the diverging outlet diffuser of the ejector; or that the flow guide arrangement extends into the ejector throttle.

7. The apparatus according to any one of the previous claims, **characterized in that**:
- the ejector (24) is provided with a lip (48) extending downstream from the ejector (24) for guiding the ejector flow (J) from the ejector (24).

8. The apparatus according to claim 4 or 5, **characterized in that**:
- the ejector (24) is provided with a lip (48) extending downstream from the ejector (24) for guiding the ejector flow (J) from the ejector (24), the lip (48) being arranged to guide ejector flow (J) inside the cup-like flow guide.

9. The apparatus according to claim 4, 5 or 8, **characterized in that**:
- the ejector (24) is provided with a lip (48) extending downstream from the ejector (24) for guiding the ejector flow (J) from the ejector (24), the lip (48) being arranged to extend inside the cup-like flow guide.

10. The apparatus according to any one of the previous claims, **characterized in that**:
- the apparatus comprises a measurement housing (17) formed to provide at least one flow guide (50).

11. The apparatus according to any one of the previous claims, **characterized in that**:
- the apparatus comprises a measurement housing (17) formed to provide at least one ion trap (12).

12. The apparatus according to claim 1, **characterized in that** the ion trap (12) is essentially a spherical cap and is mechanically supported from the intersection of the plane Y and the central axis X of the cap.

## Patentansprüche

1. Vorrichtung (1) zum Überwachen von Partikeln in einem Kanal (11) oder einem Raum, der Aerosol umfasst, wobei die Vorrichtung (1) folgendes umfasst:
- einen Ausstoßer (24);
- eine Gasversorgung (6, 16, 18, 19), die angeordnet ist, den Ausstoßer (24) eine Strömung (C) im Wesentlichen partikelfreien ionisierten Gases zu speisen, um zumindest einen Bruchteil der Partikel der Probenaerosolströmung (A) zu laden;
- eine Probeneinlassanordnung (2), die angeordnet ist, eine Probenaerosolströmung (A) mithilfe eines durch die Gasversorgung (6, 16, 18, 19) und den Ausstoßer (24) gelieferten Sogs aus dem Kanal (11) oder dem Raum in den Ausstoßer (24) zu liefern; und
- eine Ionenfalle (12) zum Entfernen von nicht an den Partikeln angebrachten Ionen aus einer Ausstoßerströmung (J);
**dadurch gekennzeichnet, dass** die Ionenfalle (12) als Strömungsführungsanordnung im Wesentlichen nach dem Ausstoßer (24) vorgesehen ist, um die Richtung der Ausstoßerströmung (J), die aus dem Ausstoßer (24) abgeführt wird, zu ändern.

2. Vorrichtung nach Anspruch 1, **dadurch gekennzeichnet, dass** die Strömungsführungsanordnung angeordnet ist, zumindest zum Teil einen Querströmungsweg für die Ausstoßerströmung (J) im Verhältnis zur axialen Richtung des Ausstoßers (24) bereitzustellen, oder dadurch, dass die Strömungsführungsanordnung angeordnet ist, zumindest zum Teil einen Radialströmungsweg für die Ausstoßerströmung (J) im Verhältnis zur axialen Richtung des Ausstoßers (24) bereitzustellen.

3. Vorrichtung nach Anspruch 1 oder 2, **dadurch gekennzeichnet, dass** die Strömungsführungsanordnung angeordnet ist, die Ausstoßerströmung (J) zumindest lokal in die im Wesentlichen entgegengesetzte Richtung im Verhältnis zur Strömungsrichtung im Inneren des Ausstoßers (24) zu wenden.

4. Vorrichtung nach einem der Ansprüche 1 bis 3, **dadurch gekennzeichnet, dass** die Strömungsführungsanordnung eine oder mehrere Strömungsführungen in Form einer Platte, einer flachen Platte oder einer gekrümmten Platte umfasst; oder dadurch, dass die Strömungsführungsanordnung eine oder mehrere Strömungsführungen in Form einer napfartigen Strömungsführung umfasst, die einen geschlossenen Boden, eine Seitenwand oder Seitenwände umfasst, die sich vom Boden und einer offenen Vorderwand aus erstrecken.

5. Vorrichtung nach Anspruch 4 im Falle einer napfartigen Strömungsführung, **dadurch gekennzeichnet, dass** die napfartige Strömungsführung angeordnet ist, die Ausstoßerströmung (J) über die offene Vorderwand aufzunehmen, um die Richtung der Ausstoßerströmung (J) zu ändern.

6. Vorrichtung nach einem der Ansprüche 1 bis 5, **dadurch gekennzeichnet, dass** die Strömungsführungsanordnung sich in den divergierenden Auslasszerstäuber des Ausstoßers erstreckt; oder dadurch, dass die Strömungsführungsanordnung sich in die Ausstoßerdrosselklappe erstreckt.

7. Vorrichtung nach einem der vorstehenden Ansprüche, **dadurch gekennzeichnet, dass** der Ausstoßer (24) mit einer Lasche (48) versehen ist, die sich vom Ausstoßer (24) stromabwärts erstreckt, um die Ausstoßerströmung (J) aus dem Ausstoßer (24) zu führen.

8. Vorrichtung nach Anspruch 4 oder 5, **dadurch gekennzeichnet, dass** der Ausstoßer (24) mit einer Lasche (48) versehen ist, die sich vom Ausstoßer (24) stromabwärts erstreckt, um die Ausstoßerströmung (J) aus dem Ausstoßer (24) zu führen, wobei die Lasche (48) angeordnet ist, die Ausstoßerströmung (J) ins Innere der napfartigen Strömungsführung zu führen.

9. Vorrichtung nach Anspruch 4, 5 oder 8, **dadurch gekennzeichnet, dass** der Ausstoßer (24) mit einer Lasche (48) versehen ist, die sich vom Ausstoßer (24) stromabwärts erstreckt, um die Ausstoßerströmung (J) aus dem Ausstoßer (24) zu führen, wobei die Lasche (48) angeordnet ist, sich ins Innere der napfartigen Strömungsführung zu erstrecken.

10. Vorrichtung nach einem der vorstehenden Ansprüche, **dadurch gekennzeichnet, dass** die Vorrichtung ein Messgehäuse (17) umfasst, das ausgebildet ist, zumindest eine Strömungsführung (50) zu liefern.

11. Vorrichtung nach einem der vorstehenden Ansprüche, **dadurch gekennzeichnet, dass** die Vorrichtung ein Messgehäuse (17) umfasst, das ausgebildet ist, zumindest eine Ionenfalle (12) zu liefern.

12. Vorrichtung nach Anspruch 1, **dadurch gekennzeichnet, dass** die Ionenfalle (12) im Wesentlichen eine kugelförmige Kappe ist und ab der Kreuzung der Ebene Y und der Mittelachse X der Kappe mechanisch gestützt wird.

## Revendications

1. Appareil (1) de surveillance de particules dans un canal (11) ou un espace comprenant de l'aérosol, l'appareil (1) comprenant :
- un éjecteur (24) ;
- de l'alimentation en gaz (6, 16, 18, 19) agencée pour alimenter de l'écoulement de gaz ionisé essentiellement sans particules (C) vers l'éjecteur (24) pour charger au moins une fraction des particules de l'écoulement d'aérosol échantillon (A) ;
- un agencement d'entrée d'échantillon (2) agencé pour fournir un écoulement d'aérosol échantillon (A) depuis le canal (11) ou l'espace dans l'éjecteur (24) par des moyens d'aspiration fournis par l'alimentation en gaz (6, 16, 18, 19) et l'éjecteur (24) ; et
- un piège à ions (12) pour enlever des ions non attachés aux particules depuis un écoulement éjecteur (J) ;
**caractérisé en ce que** le piège à ions (12) est prévu en tant que dispositif de guidage d'écoulement essentiellement en aval de l'éjecteur (24) pour changer la direction de l'écoulement éjecteur (J) s'écoulant de l'éjecteur (24).

2. Appareil selon la revendication 1, **caractérisé en ce que** le dispositif de guidage d'écoulement est agencé pour fournir au moins partiellement un trajet d'écoulement transversal pour l'écoulement éjecteur (J) en relation avec la direction axiale de l'éjecteur (24), ou **en ce que** le dispositif de guidage d'écoulement est agencé pour fournir au moins partiellement un trajet d'écoulement radial pour l'écoulement éjecteur (J) en relation avec la direction axiale de l'éjecteur (24).

3. Appareil selon la revendication 1 ou 2, **caractérisé en ce que** le dispositif de guidage d'écoulement est agencé pour faire tourner l'écoulement éjecteur (J) au moins localement vers une direction sensiblement opposée en relation avec la direction d'écoulement à l'intérieur de l'éjecteur (24).

4. Appareil selon l'une quelconque des revendications 1 à 3, **caractérisé en ce que** le dispositif de guidage d'écoulement comprend un ou plusieurs guides d'écoulement sous la forme d'une plaque, plaque plate ou une plaque incurvée ; ou **en ce que** le dispositif de guidage d'écoulement comprend un ou plusieurs guides d'écoulement sous la forme d'un guide d'écoulement en forme de coupe comprenant un fond fermé, une paroi latérale ou des parois latérales s'étendant depuis le fond et une paroi avant ouverte.

5. Appareil selon la revendication 4 dans le cas d'un guide d'écoulement en forme de coupe, **caractérisé en ce que** le guide d'écoulement en forme de coupe est agencé pour recevoir l'écoulement éjecteur (J) via la paroi avant ouverte pour changer la direction de l'écoulement éjecteur (J).

6. Appareil selon l'une quelconque des revendications 1 à 5, **caractérisé en ce que** le dispositif de guidage d'écoulement s'étend dans le diffuseur de sortie divergent de l'éjecteur ; ou **en ce que** le dispositif de guidage d'écoulement s'étend dans le papillon des gaz éjecteur.

7. Appareil selon l'une quelconque des revendications précédentes, **caractérisé en ce que** :
- l'éjecteur (24) est muni d'une lèvre (48) s'étendant en aval de l'éjecteur (24) pour guider l'écoulement éjecteur (J) depuis l'éjecteur (24).

8. Appareil selon la revendication 4 ou 5, **caractérisé en ce que** :
- l'éjecteur (24) est muni d'une lèvre (48) s'étendant en aval de l'éjecteur (24) pour guider l'écoulement éjecteur (J) depuis l'éjecteur (24), la lèvre (48) étant agencée pour guider de l'écoulement éjecteur (J) à l'intérieur du guide d'écoulement en forme de coupe.

9. Appareil selon la revendication 4, 5 ou 8, **caractérisé en ce que** :
- l'éjecteur (24) est muni d'une lèvre (48) s'étendant en aval de l'éjecteur (24) pour guider l'écoulement éjecteur (J) depuis l'éjecteur (24), la lèvre (48) étant agencée pour s'étendre à l'intérieur du guide d'écoulement en forme de coupe.

10. Appareil selon l'une quelconque des revendications précédentes, **caractérisé en ce que** :
- l'appareil comprend un boîtier de mesure (17) formé de manière à fournir au moins un guide d'écoulement (50).

11. Appareil selon l'une quelconque des revendications précédentes, **caractérisé en ce que** :
- l'appareil comprend un boîtier de mesure (17) formé de manière à fournir au moins un piège à ions (12).

12. Appareil selon la revendication 1, **caractérisé en ce que** le piège à ions (12) est essentiellement une calotte sphérique et est supporté mécaniquement à partir de l'intersection du plan Y et de l'axe central X de la calotte.
